(19) Europäisches Patentamt
European Patent Office
Office européen des brevets

(11) **EP 2 879 034 A1**

(12) **DEMANDE DE BREVET EUROPEEN**

(43) Date de publication:
**03.06.2015 Bulletin 2015/23**

(51) Int Cl.:
***G06F 3/0482*** *(2013.01)*

(21) Numéro de dépôt: **14195451.1**

(22) Date de dépôt: **28.11.2014**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **29.11.2013 FR 1361881**

(71) Demandeur: **Orange**
**75015 Paris (FR)**

(72) Inventeurs:
• **Kuster, Christine**
  **35370 Argentré du Plessos (FR)**
• **Millet, Valentin**
  **Montreal, QC H2G 3A3 (CA)**
• **Lebrun, Suzanne**
  **35200 Rennes (FR)**

(54) **Adaptation d'un menu à un contexte d'utilisation et générateur de menu adaptable**

(57) L'invention concerne une adaptation d'un menu comportant des éléments de déclenchement, un générateur de menu adaptable et une application comportant un menu adaptable.

Un objet de l'invention est un procédé d'adaptation d'un menu à un contexte d'utilisation, ledit menu comportant au moins une liste globale d'éléments de déclenchement, ledit procédé d'adaptation comportant un remplacement d'une liste globale d'éléments de déclenchement lors d'une reproduction dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

Ainsi, la liste réduite n'est pas fixe mais s'adapte au contexte d'utilisation permettant de proposer un menu différent notamment en fonction de l'utilisateur et/ou du terminal reproduisant ledit menu et/ou agenda...

| m | LR1 | LR2 | . . . | LR$_N$ |
|---|---|---|---|---|
|   | TRG 100 |   |   |   |
|   | trg 102 |   |   |   |
|   | trg 103 |   |   |   |
|   | ⋮ |   |   |   |
|   | trg 110 |   |   |   |
|   | ⋮ |   |   |   |

**Fig. 4c(3)**

EP 2 879 034 A1

**Description**

L'invention concerne une adaptation d'un menu comportant des éléments de déclenchement, un générateur de menu adaptable et une application comportant un menu adaptable.

Dans une interface informatique, les différents types de menu ont pour but de naviguer dans les différentes pages de l'interface ou IHM (Interface Homme Machine) ou de réaliser une action spécifique.

De nombreuses applications utilisent des menus composés d'éléments de déclenchement pour mettre en oeuvre des actions liés à ces éléments de déclenchement. Notamment, un élément de déclenchement d'un menu permet de déclencher soit un traitement sur une donnée ou un contenu préalablement sélectionnée, soit un accès à une ou plusieurs données ou contenu...

Les menus peuvent être prédéfinis : la liste d'éléments de déclenchement ou commandes ne varie pas et reste donc fixe dans toute l'interface. Il existe aussi des menus dits contextuels dont la liste de commandes est variable et s'ouvre lorsqu'un utilisateur sélectionne, d'une manière spécifique, un endroit de l'interface offrant ainsi une liste de commandes qui varie selon l'endroit ciblée. Le plus souvent, l'utilisateur déclenche ces menus à l'aide du bouton secondaire (appelé clic droit) de la souris.

Les applications évoluant et proposant de plus en plus de services : traitements accès à un plus grand nombre de données, contenus, etc., le nombre de listes d'éléments de déclenchement et d'éléments de déclenchement des menus croit. Ce nombre d'éléments de déclenchement grandissant entraine des difficultés supplémentaires pour l'utilisateur de l'application qui se perd pour retrouver les traitements dont il veut commander l'exécution ou les données, contenus auxquels ils souhaitent accéder.

Pour cette raison les applications proposent souvent des menus avec des listes réduites d'éléments de déclenchement composées d'un sous-ensemble fixe des éléments de déclenchement de la liste globale. Ce sous-ensemble est notamment composé des éléments de déclenchement les plus couramment utilisés dans la version précédente de l'application par l'ensemble des utilisateurs. Dans ce cas sur une version donnée d'une application, les menus restent prédéfinis.

Eventuellement, les menus peuvent être personnalisables par l'utilisateur qui ajoute ou enlève lui-même un élément de déclenchement à une liste préexistante. Ces menus personnalisables restent néanmoins figés entre deux utilisations de l'application. Deux difficultés apparaissent dans cette personnalisation manuelle :

- la première est la difficulté dans le choix lui-même en raison du grand nombre d'éléments de déclenchement généralement disponibles : difficulté à repérer les éléments de déclenchement qui pourrait lui être utile, difficulté à comprendre l'apport chaque élément de déclenchement disponible...

- la deuxième est dans le fait que la liste reste figée dans l'état de personnalisation : trop réduite, elle limitera l'utilisation de l'application ; trop large, elle risque de perdre l'utilisateur. En outre, si l'utilisateur évolue, il devra faire l'effort de modifier la personnalisation sous peine de voir son utilisation de l'application entravée.

De plus, certaines interfaces proposent des menus dynamiques dont la liste de commandes est générée automatiquement et dynamiquement par l'application suite à des actions de l'utilisateur. Il s'agit de menus d'historiques tels que l'historique de Word qui se constitue au fil de l'ouverture/fermeture de documents et qui propose dans son menu d'historique de fichiers une liste de fichiers donnés à un instant T puis, à un instant T+2, la même liste à laquelle aura été ajouté un fichier qui aura été ouvert à l'instant T+1. Cet historique pourra présenté les mêmes inconvénients que les menus prédéfinis après plusieurs utilisations en raison du grand nombre de fichiers ouverts à savoir la difficulté d'y retrouver un fichier qui ne fait pas partie des 5 derniers fichiers ouverts (par exemple).

Dans l'ensemble de ces menus, la notion d'abondance ou de pauvreté d'éléments de déclenchement dans une liste n'est pas gérée. Ainsi, les listes d'éléments de déclenchement peuvent être longues à parcourir à l'image des menus déroulant de choix de pays, ou incomplètes du fait de leur nature fixe ou dans le cas d'une personnalisation manuelle.

Un des buts de la présente invention est de remédier à des inconvénients de l'état de la technique.

Un objet de l'invention est un procédé d'adaptation d'un menu à un contexte d'utilisation, ledit menu comportant au moins une liste globale d'éléments de déclenchement, ledit procédé d'adaptation comportant un remplacement d'une liste globale d'éléments de déclenchement lors d'une reproduction dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

Ainsi, la liste réduite n'est pas fixe mais s'adapte au contexte d'utilisation permettant de proposer un menu différent notamment en fonction de l'utilisateur et/ou du terminal reproduisant ledit menu et/ou agenda... Plus la liste est réduite plus le risque de mise en oeuvre d'un traitement par erreur sur un élément de déclenchement diminue.

Avantageusement, le procédé d'adaptation comporte une prévision des éléments de déclenchement qui ont une probabilité d'être sélectionné dans ledit contexte d'utilisation supérieure à un seuil de sélection parmi les éléments de déclenchement d'une liste globale dudit menu.

Avantageusement, les éléments de déclenchement prévus sont fonction d'au moins un contenu précédemment sélectionné dans une application utilisant ledit menu.

En particulier, la sélection d'un contenu en utilisant une première liste d'un menu d'une application pourra avoir un impact sur la réduction d'une deuxième liste d'un menu de la même application, et pas seulement sur la première liste.

Ainsi, lorsqu'un contenu d'histoire est sélectionné, la probabilité de sélectionner un élément de déclenchement d'accès à des contenus d'histoire ou un élément de déclenchement de génération d'une frise chronologique croît alors que cela n'a pas d'impact sur la probabilité de sélectionner un élément de déclenchement de génération une équation mathématique.

Avantageusement, les éléments de déclenchement prévus sont fonction d'au moins un contenu précédemment injecté dans une application utilisant ledit menu.

Ainsi, le chargement dans une application d'un document à partir d'une base de données externe à l'application, notamment à partir d'Internet ou d'un périphérique du terminal de l'utilisateur tel qu'un appareil photo, un téléphone mobile, un caméscope... pourra avoir un impact sur la réduction d'au moins une liste d'un menu de cette application.

Avantageusement, les éléments de déclenchement prévus sont fonction des éléments de déclenchement de ladite liste globale précédemment sélectionnés dans un même contexte d'utilisation.

Ainsi la prévision (qu'elle soit exécutée au sein du procédé d'adaptation ou non) est simplifiée car elle prend en compte les utilisations passées du menu dans le même contexte. Notamment, le résultat de la prévision peut être une liste des éléments de déclenchement ayant une statistique d'utilisation passée dans le même contexte d'utilisation supérieur à un seuil d'utilisation prédéterminé.

Avantageusement, les éléments de déclenchement prévus sont ordonnés dans ladite liste réduite en fonction de leur probabilité d'être sélectionnés dans ledit contexte d'utilisation.

Ainsi, la liste réduite est ordonnée des éléments de déclenchement dont la probabilité d'être sélectionnés est la plus forte aux éléments de déclenchement dont la probabilité d'être sélectionnés est la plus faible. Cela permet de réduite les erreurs de mise en oeuvre de traitement ou d'accès à partir du menu.

Avantageusement, ladite liste réduite comporte en outre un élément de déclenchement permettant d'afficher la liste globale lorsque ledit élément de déclenchement est sélectionné.

Ainsi, l'ensemble des éléments de déclenchement de la liste globale reste facilement accessible à partir de la liste réduite. Cela réduit l'utilisation d'un traitement à la place d'un traitement moins approprié en raison de la difficulté à trouver l'élément de déclenchement le déclenchant.

Avantageusement, ledit procédé d'adaptation comporte une reproduction des éléments de déclenchement prévus de ladite liste réduite en fonction du nombre d'éléments de déclenchement prévus de ladite liste réduite.

En particulier, le procédé d'adaptation peut ainsi dimensionner les éléments de déclenchement d'une liste de manière inversement proportionnelle au nombre d'éléments de déclenchement de la liste.

Ainsi, la reproduction permet de guider l'utilisateur de l'application dans sa sélection pour réduire les erreurs de sélection.

Avantageusement, ledit procédé d'adaptation comporte une reproduction des éléments de déclenchement prévus de ladite liste réduite en fonction de leur probabilité d'être sélectionnés dans ledit contexte d'utilisation.

Ainsi, plus un élément de déclenchement a une probabilité d'être sélectionné plus le risque de mise en oeuvre d'un traitement par erreur à la place de celui lié à cet élément de déclenchement diminue. En effet, le procédé d'adaptation peut ainsi dimensionner les éléments de déclenchement d'une liste de manière proportionnelle à leur probabilité d'être sélectionné.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un adaptateur de menu et étant conçus pour commander l'exécution des différentes étapes de ce procédé.

L'invention vise donc aussi un programme comprenant des instructions de code de programme pour l'exécution des étapes du procédé d'adaptation d'un menu lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est aussi un procédé de génération d'un menu comportant au moins une liste globale d'éléments de déclenchement, ledit procédé de génération d'un menu comportant une adaptation dudit menu à un contexte d'utilisation par remplacement d'une liste globale d'éléments de déclenchement lors d'une reproduction dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un générateur de menus adaptables et étant conçus pour commander l'exécution des différentes étapes de ce procédé.

L'invention vise donc aussi un programme comprenant des instructions de code de programme pour l'exécution des étapes du procédé de génération d'un menu lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un autre objet de l'invention est un adaptateur d'un menu à un contexte d'utilisation, ledit menu comportant au moins une liste globale d'éléments de déclenchement, ledit adaptateur comportant un commutateur apte à remplacer, lors d'une reproduction dudit menu, une liste globale d'éléments de déclenchement dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

Un objet de l'invention est encore un générateur de menu adaptable comportant au moins une liste globale d'éléments de déclenchement, ledit générateur comportant un adaptateur dudit menu à un contexte d'utilisation par remplacement d'une liste globale d'éléments de déclenchement lors d'une reproduction dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

Un objet de l'invention est également, une application comportant un menu, ledit menu comportant au moins une liste globale d'éléments de déclenchement, lesdits éléments de déclenchement permettant à ladite application de mettre en oeuvre des actions prédéterminées associées auxdits éléments de déclenchement, ladite application comportant un adaptateur dudit menu à un contexte d'utilisation par remplacement d'une liste globale d'éléments de déclenchement lors d'une reproduction dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

Les caractéristiques et avantages de l'invention apparaîtront plus clairement à la lecture de la description, faite à titre d'exemple, et des figures s'y rapportant qui représentent :

- Figure 1, un schéma simplifié d'un procédé d'adaptation d'un menu selon l'invention,
- Figure 2, un schéma simplifié d'un adaptateur d'un menu selon l'invention,
- Figure 3, un schéma simplifié d'un exemple d'application mettant en oeuvre l'invention,
- Figures 4a, 4b, 4c(1), 4c(2), et 4c(3), respectivement un schéma d'un menu sans adaptation, un schéma simplifié de génération d'une liste réduite selon l'invention, et trois variantes d'un menu adapté selon l'invention, lors d'une adaptation d'un menu selon l'invention,
- Figures 5a et 5b, respectivement une illustration d'un document permettant de déterminer un éléments de déclenchement prévus pour réduire une liste d'un menu dans un exemple d'application, et une illustration d'un menu proposant une liste réduite en fonction du document de la figure 5a dans cet exemple d'application.

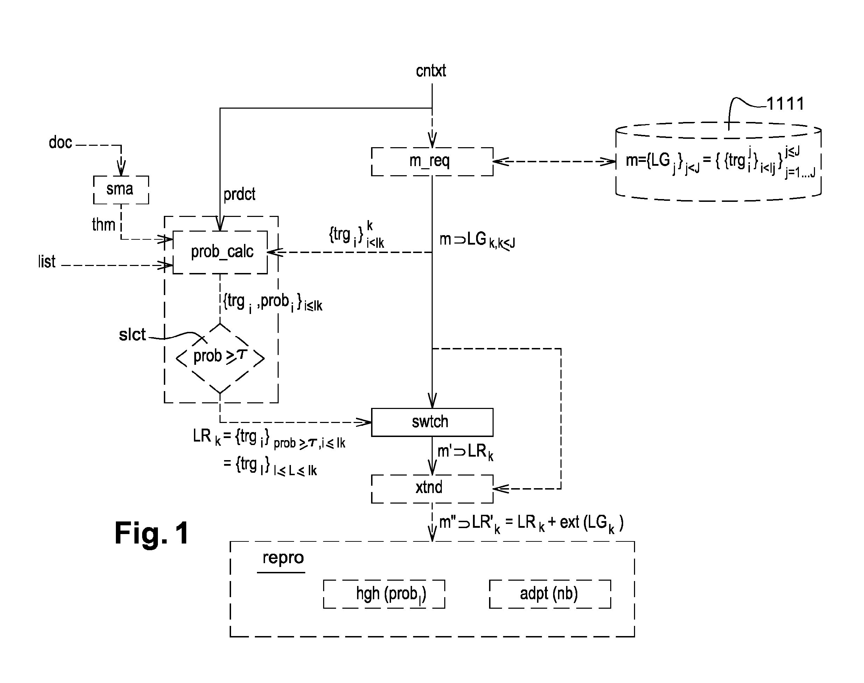

La figure 1 illustre un schéma simplifié d'un procédé d'adaptation d'un menu selon l'invention.

Le procédé d'adaptation d'un menu adapte un menu m à un contexte d'utilisation *cntxt*. Le menu m comporte au moins une liste globale $LG_j$ d'éléments de déclenchement $\{trg_i\}$. Le procédé d'adaptation comporte un remplacement *swtch* d'une liste globale $LG_k$ d'éléments de déclenchement lors d'une reproduction *repro* dudit menu m par une liste réduite $LR_k$ comportant des éléments de déclenchement prévus $\{trgp_l\}_{l \leq L \leq lk}$ parmi les éléments de déclenchement $\{trg_i\}_{i \leq lk}$ de ladite liste globale $LG_k$. Les éléments de déclenchement prévus $trg_l$ sont des éléments de déclenchement $trg_i$ qui ont une probabilité d'être sélectionné dans ledit contexte d'utilisation supérieure à un seuil de sélection : $prob_i = prob(trg_i) \geq \tau$.

Le contexte d'utilisation dépendant de l'utilisateur est aussi nommé profil utilisateur. En effet, le contexte d'utilisation est fonction de l'utilisateur et/ou du terminal choisi par l'utilisateur pour reproduire ledit menu et/ou de l'agenda de l'utilisateur.

Ainsi, pour une application destinés à des utilisateurs enseignants, le contexte d'utilisation tient compte notamment :

- de la matière enseignée par l'utilisateur pour adapté le menu (soit que le procédé d'adaptation de l'invention la connaisse, soit qu'il la détermine à partir de l'utilisation de l'application par l'enseignant) ; et/ou
- du terminal utilisé (par exemple, l'enseignant utilise préférentiellement un ordinateur pour créer ses cours, une tablette pour les modifier et son smartphone pour en contrôler la présentation aux élèves );
- de l'agenda ( par exemple, pendant ses cours, l'enseignant n'utilise pas les actions de création de cours )

Un ou plusieurs de ces comportements de l'utilisateur sont, notamment, déterminés par procédé d'adaptation de l'invention pour calculer la probabilité de sélection d'un élément de déclenchement et adapter le menu ;

En particulier, le procédé d'adaptation comporte une récupération d'un menu m_req (aussi appelé obtention d'un menu) dans une mémoire 1111. La récupération permet, pour un menu m demandé, de récupérer l'ensemble des listes globales $\{LG_j\}_{j<J}$ qui le compose, c'est-à-dire l'ensemble des éléments de déclenchement $\{trg_i\}_{i<lj}$ de chacune des listes globales $LG_j$ qui compose ce menu m.

En particulier, le procédé d'adaptation comporte une prévision *prdct* des éléments de déclenchement qui ont une probabilité d'être sélectionné dans ledit contexte d'utilisation supérieure à un seuil de sélection $\tau$ parmi les éléments de déclenchement d'une liste globale dudit menu. La prévision comporte, notamment, un calcul de la probabilité *prob_calc* de sélection de chaque élément de déclenchement $\{trg_i\}_{i\leq lk}^k$ d'une liste globale $LG_k$, puis une sélection *slct* parmi les éléments de déclenchement $trg_i$ de ceux dont la probabilité $prob_i$ calculée est supérieur à un seuil $\tau$ fournissant ainsi les éléments de déclenchement prévus $trg_l$. Ainsi la liste réduite $LR_k$ est composé d'un ensemble d'éléments de déclenchement de probabilité supérieur à un seuil de sélection $\{trg_i\}_{prob\geq\tau,i\leq lk}$ correspondant à un ensemble d'éléments de déclenchement prévus $\{trg_l\}_{l\leq L\leq lk}$.

Notamment, un élément de déclenchement d'un menu permet de déclencher soit un traitement sur une donnée ou un contenu préalablement sélectionnée, soit un accès à une ou plusieurs données ou contenu, soit un filtrage de données, contenus ou autres documents mis à disposition par une application...

En particulier, les éléments de déclenchement prévus sont fonction d'au moins un contenu *doc* précédemment sélectionné dans une application utilisant ledit menu.

En particulier, les éléments de déclenchement prévus sont fonction d'au moins un contenu *doc* précédemment injecté dans une application utilisant ledit menu.

Notamment, le procédé d'adaptation comporte une analyse sémantique *sma* d'un contenu doc, tel qu'un contenu précédemment sélectionné ou un contenu précédemment injecté. Les résultats *thm* de l'analyse sémantique *sma* sont utilisés pour déterminer les éléments de déclenchement prévus. En particulier, la prévision *prdct.*est fonction de ces résultats *thm*, et, donc, indirectement des contenus *doc* précédemment sélectionnés et/ou injectés.

En particulier, les éléments de déclenchement prévus sont fonction des éléments de déclenchement de ladite liste globale précédemment sélectionnés dans un même contexte d'utilisation *hist.*

En particulier, la prévision *prdct* est fonction des éléments de déclenchement de ladite liste globale précédemment sélectionnés dans un même contexte d'utilisation *hist.*

En particulier, les éléments de déclenchement prévus $trgp_l$ sont ordonnés dans ladite liste réduite $LR_k$ en fonction de leur probabilité d'être sélectionnés dans ledit contexte d'utilisation $prob_l$.

En particulier, la liste réduite $LR_k$ comporte en outre un élément de déclenchement *ext* permettant d'afficher la liste globale $LG_k$ lorsque ledit élément de déclenchement ext est sélectionné. Notamment, le procédé d'adaptation comporte une extension de menu xtnd permettant d'ajouter à une liste réduite $LR_k$ constituée d'éléments de déclenchement prévus un élément de déclenchement ext permettant de déclencher lors d'une sélection de l'élément de déclenchement *ext* une reproduction de la liste globale $LG_k$ au lieu d'une reproduction de la liste réduite $LR_k$. Ainsi, la liste globale $LG_k$ peut être substituée à la liste réduite $LR_k$ lors de la reproduction du menu sur demande de l'utilisateur.

En particulier, le procédé d'adaptation comporte une reproduction *repro* du menu m' comportant au moins une liste réduite $LR_k$.

En particulier, le procédé d'adaptation comporte une reproduction *adapt* des éléments de déclenchement prévus $trgp_l$ de ladite liste réduite $LR_k$ en fonction du nombre nb d'éléments de déclenchement prévus de ladite liste réduite.

En particulier, le procédé d'adaptation comporte une reproduction *hgh* des éléments de déclenchement prévus de ladite liste réduite en fonction de leur probabilité d'être sélectionnés dans ledit contexte d'utilisation $prob_l$.

Un mode de réalisation du procédé d'adaptation d'un menu selon l'invention est un programme comprenant des instructions de code de programme pour l'exécution des étapes du procédé d'adaptation d'un menu lorsque ledit programme est exécuté par un processeur.

L'invention concerne en outre un procédé de génération d'un menu. Le menu m comporte au moins une liste globale $LG_j$ d'éléments de déclenchement $\{trg_i\}$. Le procédé de génération d'un menu m comporte une adaptation dudit menu m à un contexte d'utilisation cntxt par remplacement *swtch* d'une liste globale $LG_k$ d'éléments de déclenchement lors d'une reproduction *repro* dudit menu m par une liste réduite $LR_k$ comportant des éléments de déclenchement prévus $\{trgp_l\}_{l\leq L\leq lk}$ parmi les éléments de déclenchement $\{trg_i\}_{i\leq lk}$ de ladite liste globale $LG_k$. Les éléments de déclenchement prévus $trg_l$ sont des éléments de déclenchement $trg_i$ qui ont une probabilité d'être sélectionné dans ledit contexte d'utilisation supérieure à un seuil de sélection : $prob_i$ = prob(tr-

gi) ≥ τ.

Un mode de réalisation du procédé de génération d'un menu selon l'invention est un programme comprenant des instructions de code de programme pour l'exécution des étapes du procédé de génération d'un menu lorsque ledit programme est exécuté par un processeur.

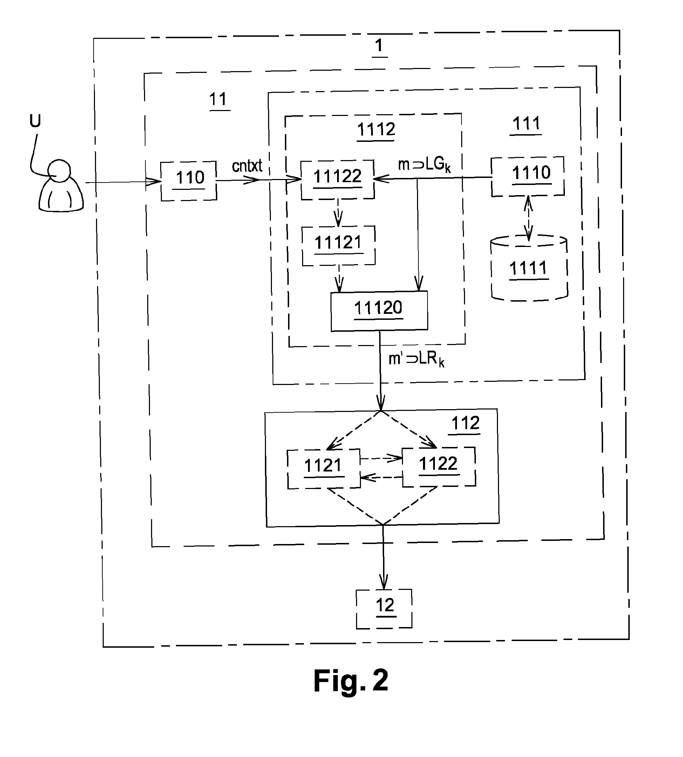

La figure 2 illustre un schéma simplifié d'un adaptateur 1112 d'un menu m à un contexte d'utilisation *cntxt* selon l'invention.

L'adaptateur 1112 comporte un commutateur 11120 apte à remplacer, lors d'une reproduction dudit menu m, une liste globale LGk d'éléments de déclenchement dudit menu m par une liste réduite LRk comportant des éléments de déclenchement prévus parmi les éléments de déclenchement de ladite liste globale. Lesdits éléments de déclenchement prévus sont des éléments de déclenchement qui ont une probabilité d'être sélectionné dans ledit contexte d'utilisation supérieure à un seuil de sélection.

En particulier, l'adaptateur 1112 comporte un dispositif de prévision (11121, 11122) fournissant au moins une liste réduite LRk composé d'éléments de déclenchement prévus parmi les éléments de déclenchement d'une liste globale LGk du menu. Les éléments de déclenchement prévus sont les éléments de déclenchement de la liste globale dont la probabilité d'être sélectionnée dans le contexte d'utilisation en cours est supérieur à un seuil de sélection prédéfini.

En particulier, le dispositif de prévision comporte un calculateur de probabilité 11121 calculant pour chaque éléments de déclenchement d'au moins une liste globale LGk du menu m la probabilité de sélection de cet élément de déclenchement dans le contexte d'utilisation sélectionné *cntxt.* Le calculateur de probabilité 11121 fournit les probabilités calculées à un sélectionneur 11122 dudit dispositif de prévision. Le sélectionneur 11122 sélectionne ainsi les éléments de déclenchement prévus parmi les éléments de déclenchement de la liste globale en fonction des probabilités calculées.

En particulier, un utilisateur U dispose d'un terminal 1 comportant :

- une application 11 ;
- et une interface de reproduction 12, telle qu'un écran, ou des haut-parleurs...

L'application 11 comporte un menu m. Le menu m comporte au moins une liste globale LGk d'éléments de déclenchement. Les éléments de déclenchement permettent à ladite application 11 de mettre en oeuvre des actions prédéterminées associées auxdits éléments de déclenchement. L'application 11 comporte un adaptateur 1112 dudit menu m à un contexte d'utilisation *cntxt* par remplacement, au moyen notamment d'un commutateur 11120) d'une liste globale LGk d'éléments de déclenchement lors d'une reproduction dudit menu m par une liste réduite LRk comportant des éléments de déclenchement prévus parmi les éléments de déclenchement de ladite liste globale. Les éléments de déclenchement prévus sont des éléments de déclenchement qui ont une probabilité d'être sélectionné dans ledit contexte d'utilisation supérieure à un seuil de sélection.

En particulier, l'application 11 comporte un récupérateur de menu (aussi appelé module d'obtention de menu) 1110 dans une base de données de menu 1111 permettant de fournir à l'adaptateur de menu 1112 l'ensemble des listes globales LGk constituant un menu de l'application 11.

En particulier, l'application 11 comporte un dispositif de reproduction 112 permettant de fournir le menu à reproduire à une interface de reproduction. Notamment, le dispositif de reproduction 112 comporte un ordonnanceur 1121 permettant de classer les éléments de déclenchements prévus d'une liste réduite du menu à reproduire dans un ordre de probabilité décroissant.

De manière alternative ou complémentaire à l'ordonnanceur, le dispositif de reproduction 112 comporte un agenceur 1122 permettant de modifier l'agencement du menu en fonction du nombre d'éléments de déclenchement de la liste réduite et/ou en fonction de leur probabilité d'être sélectionné.

Par exemple, l'agenceur 1122 définit la taille du rectangle d'affichage d'un élément de déclenchement et/ou la taille de police d'affichage d'un élément de déclenchement en fonction du nombre d'éléments de déclenchement de la liste réduite. Autre exemple, la taille de police d'affichage d'un élément de déclenchement peut être proportionnelle à la probabilité de sélection de cet élément de déclenchement. En complément, la police d'affiche et/ou la couleur de surlignage etc. d'un élément de déclenchement peut être fonction de la probabilité de sélection de cet élément de déclenchement.

En particulier, le terminal 1, notamment l'application 11, comporte un générateur de menu adaptable 111 comportant au moins une liste globale d'éléments de déclenchement. Le générateur 111 comporte un adaptateur 1112 dudit menu à un contexte d'utilisation par remplacement (notamment au moyen d'un commutateur 11120) d'une liste globale d'éléments de déclenchement lors d'une reproduction dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

En particulier, ledit générateur 111 comporte un récupérateur de menu 1110 dans une base de données de menu 1111.

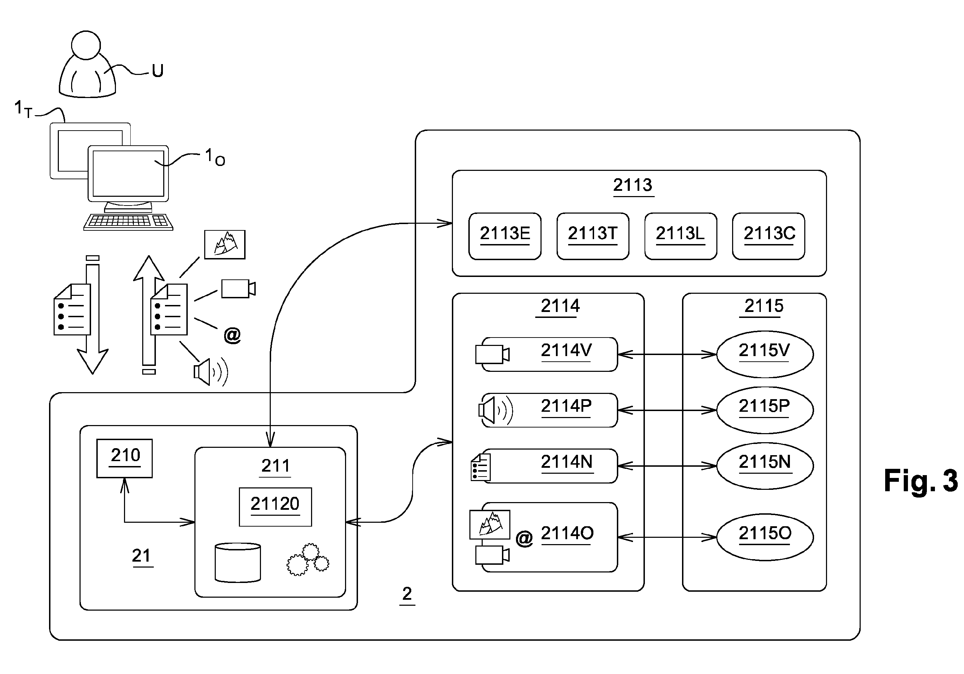

La figure 3 illustre un schéma simplifiée d'un exemple d'application mettant en oeuvre l'invention.

En l'occurrence, l'application 21 propose la création de deuxièmes contenus tels qu'un document d'enseignement, voire une présentation pédagogique, à partir de premiers contenus existants, tels que des fiches de projet pédagogiques, des photos, vidéos, articles de presse ou de manuels scolaires, etc.

Dans l'exemple illustré par la figure 3, un utilisateur U met en oeuvre l'application 21 à partir d'un terminal tel qu'une tablette ou un Smartphone $1_T$, ou un ordinateur $1_O$ connecté à un dispositif de fourniture de service 2, proposant ladite application 21.

L'application 21 met en oeuvre sa partie avant 210 ou front en anglais pour la mise en relation de l'application 21 avec au moins un terminal $1_T$ ou $1_O$ d'un utilisateur U, et sa partie arrière 211 ou back end pour l'exécution de l'application proprement dite.

Notamment le back end 211 comporte un analyseur sémantique 2113 composé , par exemple, d'extracteur(s) tel(s) qu'un extracteur d'entités nommées 2113E, un extracteur de thème 2113T, un identificateur de langage 2113L, un extracteur de concepts 2113C, etc. L'analyseur sémantique 2113 analyse notamment un document lors de son injection dans l'application, c'est-à-dire le chargement de ce document dans l'une des bases de données de l'application, et lui associe au moins le résultat *thm* de cette analyse. Le résultat de l'analyse *thm* est notamment composé d'une ou plusieurs des données suivantes: une entité nommée fournie par l'extracteur $2113^E$ et/ou un thème fourni par l'extracteur 2113T et/ou un langage fourni par l'identificateur 2113L et/ou un concept fourni par l'extracteur 2113C.

Le back end 211 de l'application de l'exemple de la figure 3 comporte aussi un dispositif d'enrichissement 2114 composé notamment d'enrichisseur vidéo 2114V (VOD/TVOD), d'enrichisseur audio 2114P permettant notamment d'utiliser les diffusion Internet (podcasts en anglais) de radio pour enrichir un deuxième document, un enrichisseur textuel 2114N notamment par articles e-press , ou un enrichissement de données provenant de périphériques divers ou de données personnels. Ces enrichisseurs 2114V, 2114P, 2114N, 21140 récupèrent les premiers documents dans des répertoires de données d'enrichissement 2115, tels que respectivement un catalogue vidéo, notamment de vidéo à la demande et/ou de télévision à la demande 2115V, des podcasts publiques 2115P, un kiosque de presse numérique 2115N, une sélection de contenus pédagogiques 21150.

Ainsi, lorsque l'utilisateur U, lors de la génération d'un deuxième document par l'application 21, sélectionne grâce à son terminal $1_T$ un premier document pour servir de base à cette génération : notamment la sélection d'une fiche de projet pédagogique, les résultats thm de l'analyse sémantique préalable par l'analyseur 2113 du premier document sélectionné seront utilisés pour générer la liste réduite du menu de cette application afin que le commutateur 21120 remplace la liste globale du menu par la liste réduite fonction de ce résultat thm.

Le nouveau menu tire profit d'un cercle vertueux constitué par l'apprentissage (calcul de probabilité d'être sélectionné en fonction des documents précédemment utilisés, notamment sélectionnés ou injectés) et la contextualisation ou adaptation automatique du menu pour proposer à l'utilisateur une liste pertinente. L'ensemble des entités nommées du texte d'un document *doc :* mot, expression, phrase, date, acronymes, etc. apporte un éclairage sur le « sens » du document doc et permet de situer le document dans un environnement spécifique pour en déduire au moins un élément déclencheur à introduire dans une liste réduite d'un menu. Le procédé d'adaptation du menu est exécuté à chaque fois que le menu est utilisé : une sélection d'un élément de déclenchement d'un menu entraîne une adaptation automatique du menu. Cette boucle itérative permet de proposer un menu adapté ou menu contextuel propre au besoin de l'utilisateur.

Le nombre de choix proposé par le menu se réduit pour devenir optimal en fonction des actions suivantes : sélection d'un document préexistant dans une base de documents associée à l'application, analyse sémantique d'un document injecté par l'utilisateur dans la base de documents associée à l'application.

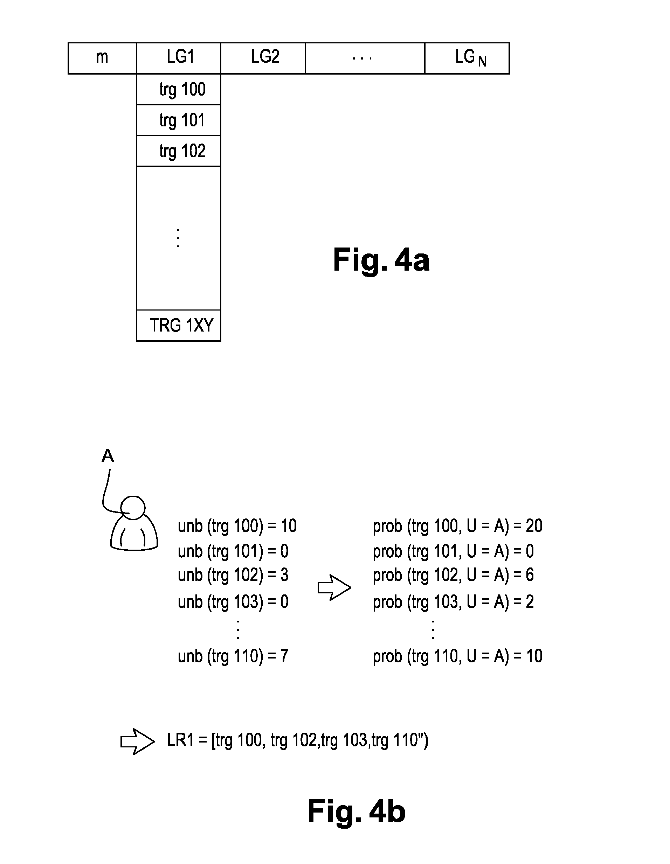

La Figure 4a illustre un schéma simplifiée d'un menu sans adaptation.

Un menu m est composé de plusieurs listes d'éléments de déclenchements, en l'occurrence plusieurs listes globale $LG_1$, $LG_2$... $LG_N$. La liste LG1 comporte notamment les éléments de déclenchements trg100, trg101, trg102... trg1xy.

Le menu est notamment affiché tel que présenté sur la figure 1 ou sous d'autres formes d'affichage, tel qu'un menu à onglets, un menu circulaire ou d'autres formes de reproduction : menu vocale, haptique...

La Figure 4b illustre un schéma simplifié de génération d'une liste réduite lors d'une adaptation d'un menu selon l'invention

Le contexte d'utilisation est notamment l'utilisation du menu par un utilisateur A.

Dans le cas de l'illustration de la Figure 4b, la liste réduite est fonction des sélections précédentes dans le même contexte. En l'occurrence, l'utilisateur A a déjà sélectionné unb = 10 fois l'élément de déclenchement trg100 de la liste globale LG1 du menu m, 0 fois l'élément de déclenchement trg101, 3 fois l'élément de déclenchement trg102, 0 fois l'élément de déclenchement trg103... 7 fois l'élément de déclenchement trg110...

Ces précédentes utilisations du menu m dans le même contexte d'utilisation à savoir une utilisation du menu m par l'utilisateur A permettent un calcul de la probabilité de sélection de chacun des éléments de la liste globale LG1 par l'utilisateur A. Notamment, la probabilité que l'utilisateur A sélectionne l'élément de déclenchement trg100 est de 20%, l'élément de déclenchement trg101 est de 0%, l'élément de déclenchement trg102 est de 6%, l'élément de déclenchement trg103 est de 2%,..., l'élément de déclenchement trg110 est de 10%,...

Ainsi, si le seuil de sélection est de 2%, la liste réduite LR1 est constitué des éléments de déclenchements dont la probabilité d'être sélectionné est supérieure ou égale à 2% soit {trg100, trg102, trg103... trg110...}

mais pas notamment de l'éléments de sélection 101 dont la probabilité est nulle.

Ainsi, lorsqu'une application propose plusieurs utilisations en fonction du type d'utilisateur, le menu pourra être adapté au type d'utilisateur. Par exemple, si le menu permet d'accéder à des contenus d'enseignement, le professeur souhaitant accéder à ces contenus pourra se voir proposer un menu adapté aux matières et/ou niveaux pour lesquels il enseigne. Autre exemple, pour une application permettant de gérer une base de données, tels que des contenus, le menu peut s'adapter aux différents types d'utilisateurs : créateur de contenus, intégrateur de contenus, diffuseur de contenus...pour leur proposer uniquement les éléments de déclenchement d'action qui leurs sont utiles, respectivement, des actions de capture, de modification, de création... pour les créateurs de contenus, des actions de recherche de contenus, d'agrégation de contenus, etc. Pour les créateurs de contenus, des actions de codage, de transmission, etc. pour les diffuseurs de contenus...

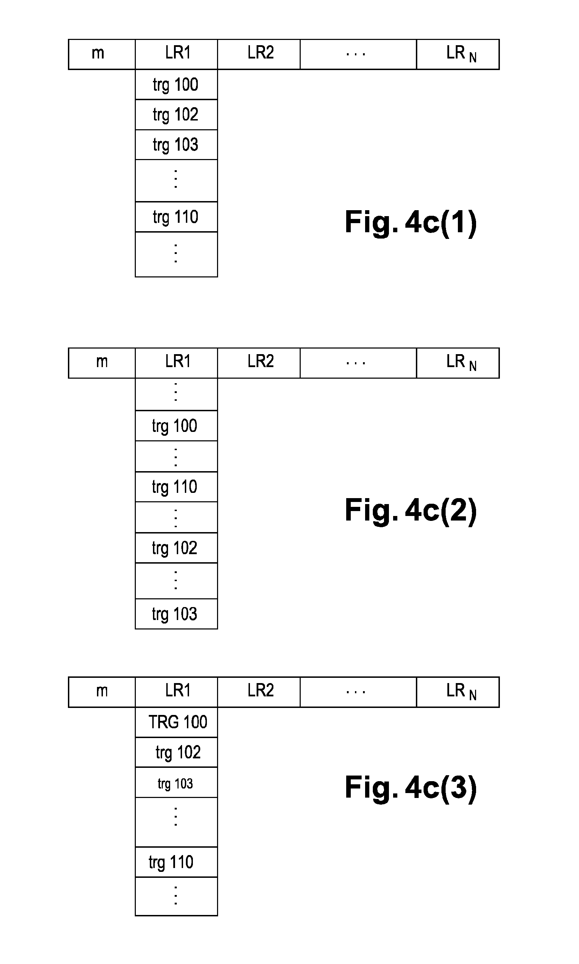

La Figure 4c(1) illustre une première variante d'un menu adapté selon l'invention. Cette variante affiche en lieu et place des listes globale du menu m les listes réduites LR1, LR2,... LRN générée par l'invention. En particulier, la liste réduite LR1 composée des éléments de déclenchement prévus trg100, trg102, trg103... trg110... dans l'ordre de la liste globale LG1 sans adaptation de la reproduction particulière.

La Figure 4c(2) illustre une troisième variante d'un menu adapté selon l'invention. Dans cette deuxième variante les éléments de déclenchement sont ordonnés en fonction de leur probabilité à être sélectionnés tel qu'illustré par la liste réduite LR1 : trg100... trg110... trg102... trg103.

La Figure 4c(3) illustre une deuxième variante d'un menu adapté selon l'invention. Dans cette troisième variante la taille de la police d'affichage est proportionnelle à la probabilité d'un élément de déclenchement d'être sélectionné.

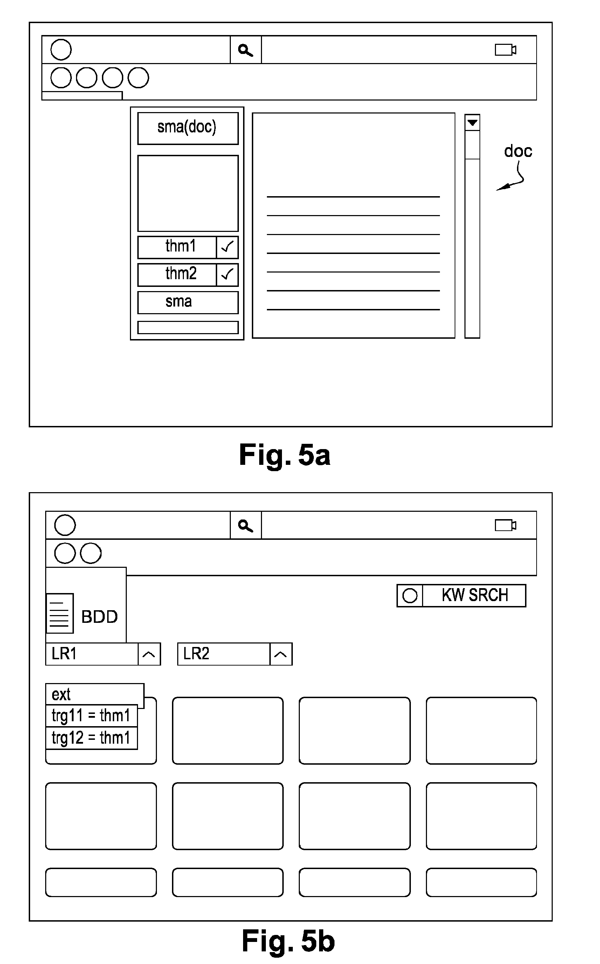

La figure 5a montre une illustration d'un document *doc* permettant de déterminer un éléments de déclenchement prévus pour réduire une liste d'un menu dans un exemple d'application .

Par exemple, si un utilisateur U demande à charger le document *doc* dans l'application 21. Le chargement de ce document *doc* va déclencher une analyse sémantique *sma.* Le résultat de l'analyse sémantique du document sma (doc) comporte par exemple les thèmes *thm1* et *thm2*.

Dans le cas de notre exemple d'application, à savoir la génération de documents pédagogiques, ces thèmes sont notamment la ou les matières concernées par le document (par exemple histoire), et/ou le ou les niveaux pédagogiques (par exemple troisième).

La figure 5b montre une illustration d'un menu proposant une liste réduite en fonction du document de la figure 5a dans cet exemple d'application.

Lorsque l'utilisateur U souhaite accéder à des documents BDD (premiers et/ou deuxièmes documents) de l'application 21, l'application peut lui fournir un menu de filtrage des documents afin de limiter le nombre de documents présentés afin de faciliter leur utilisation.

Le menu de filtrage peut présenter un ou plusieurs critères de filtrage constitués chacun par une liste d'éléments de déclenchement, en particulier deux listes LR1 et LR2 qui sont dans notre exemple un liste de filtrage en fonction de la matière, et une liste de filtrage en fonction du niveau pédagogique.

Les utilisations précédentes de documents par l'utilisateur U ont permis de réduire ces deux listes LR1 et LR2. Notamment, la liste réduite LR1 comporte un élément de déclenchement trg11 fonction du résultat thm1 de l'analyse sémantique du document doc de la figure 5a. En l'occurrence, l'élément de déclenchement trg11 correspond à la matière « histoire » en raison du thème « histoire » du document *doc.* L'élément de déclenchement trg12 correspond à une autre probabilité d'être sélectionnée supérieur à un seuil prédéterminé. Et l'élément de déclenchement *ext* permet de reproduire la liste globale dont est issue la liste réduite LR1.

Ainsi, dans le cas d'un enseignant qui enseigne l'histoire-géographie en 5$^{ième}$, 4$^{ième}$ et 3$^{ième}$, un menu classique lui proposera de sélectionner sa matière dans une liste d'au moins 23 éléments de déclenchement et ses niveaux d'enseignement dans une liste d'au moins 15 éléments de déclenchement, alors que l'invention permettra de réduire ces listes : la liste « matières » ne lui proposera que deux éléments de déclenchement et la liste « niveaux » trois éléments de déclenchement.

La génération de ce menu adapté se fait à partir :

- d'actions simples telles que la sélection d'un document proposé par l'application qui a fait l'objet d'une analyse sémantique préalable. La récurrence de l'action entrainant la mise à jour des listes du menu. Exemple : l'enseignant sélectionne la fiche de projet pédagogique d'histoire-géographie de 5$^{ième}$ ou le bulletin officiel correspondant, l'application enregistre cette action et réduit les listes du menu à ces matières et cette classe.

- d'actions complexes : analyse d'un document par des modules de traitements sémantiques pour en extraire des mots clefs et un contexte. A partir de cette analyse, l'application identifie la ou les matières et le ou les niveaux concernés. Par exemple, l'enseignant soumet un texte. L'application détecte après analyse qu'il s'agit de la première guerre mondiale. L'application en déduit qu'il s'agit du programme d'histoire de 3$^{ième}$ et met à jour le ou les listes d'élément de déclenchement du menu.

A travers ces deux actions, le menu est adapté et propose à l'enseignant des listes réduite aux matières histoire et géographie, et aux niveaux 5$^{ième}$ et 3$^{ième}$.

L'invention vise aussi un support. Le support d'informations peut être n'importe quelle entité ou dispositif capable de stocker un programme selon l'invention. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

**Revendications**

1. Procédé d'adaptation d'un menu d'une application à un contexte d'utilisation, ledit menu comportant au moins une liste globale d'éléments de déclenchement d'une fonction de ladite application, ledit procédé d'adaptation comportant un remplacement d'une liste globale d'éléments de déclenchement lors d'une reproduction dudit menu par une liste réduite comportant des éléments de déclenchement prévus parmi les éléments de déclenchement de ladite liste globale, lesdits éléments de déclenchement prévus étant des éléments de déclenchement qui, dans ledit contexte d'utilisation, ont une probabilité d'être sélectionné supérieure à un seuil de sélection.

2. Procédé d'adaptation d'un menu selon la revendication précédente, **caractérisé en ce que** ledit procédé d'adaptation comporte une prévision des éléments de déclenchement qui ont une probabilité d'être sélectionné dans ledit contexte d'utilisation supérieure à un seuil de sélection parmi les éléments de déclenchement d'une liste globale dudit menu.

3. Procédé d'adaptation d'un menu selon l'une quelconque des revendications précédentes, **caractérisé en ce que** les éléments de déclenchement prévus sont fonction d'au moins un contenu précédemment sélectionné dans une application utilisant ledit menu.

4. Procédé d'adaptation d'un menu selon l'une quelconque des revendications précédentes, **caractérisé en ce que** les éléments de déclenchement prévus sont fonction d'au moins un contenu précédemment injecté dans une application utilisant ledit menu.

5. Procédé d'adaptation d'un menu selon l'une quelconque des revendications précédentes, **caractérisé en ce que** les éléments de déclenchement prévus sont fonction des éléments de déclenchement de ladite liste globale précédemment sélectionnés dans un même contexte d'utilisation.

6. Procédé d'adaptation d'un menu selon l'une quelconque des revendications précédentes, **caractérisé en ce que** les éléments de déclenchement prévus sont ordonnéss dans ladite liste réduite en fonction de leur probabilité d'être sélectionnés dans ledit contexte d'utilisation.

7. Procédé d'adaptation d'un menu selon l'une quelconque des revendications précédentes, **caractérisé en ce que** ladite liste réduite comporte en outre un élément de déclenchement permettant d'afficher la liste globale lorsque ledit élément de déclenchement est sélectionné.

8. Procédé d'adaptation d'un menu selon l'une quelconque des revendications précédentes, **caractérisé en ce que** ledit procédé d'adaptation comporte une reproduction des éléments de déclenchement prévus de ladite liste réduite en fonction du nombre d'éléments de déclenchement prévus de ladite liste réduite.

9. Procédé d'adaptation d'un menu selon l'une quelconque des revendications précédentes, **caractérisé en ce que** ledit procédé d'adaptation comporte une reproduction des éléments de déclenchement prévus de ladite liste réduite en fonction de leur probabilité d'être sélectionnés dans ledit contexte d'utilisation.

10. Programme comprenant des instructions de code de programme pour l'exécution des étapes du procédé d'adaptation d'un menu selon l'une quelconque des revendications précédentes lorsque ledit programme est exécuté par un processeur.

11. Procédé de génération d'un menu comportant au moins une liste globale d'éléments de déclenchement, ledit procédé de génération d'un menu comportant une adaptation dudit menu à un contexte d'utilisation par remplacement d'une liste globale d'éléments de déclenchement lors d'une reproduction dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

12. Programme comprenant des instructions de code de programme pour l'exécution des étapes du procédé de génération d'un menu selon la revendication précédente lorsque ledit programme est exécuté par un processeur.

13. Adaptateur d'un menu à un contexte d'utilisation, ledit menu comportant au moins une liste globale d'éléments de déclenchement, ledit adaptateur comportant un commutateur apte à remplacer, lors d'une reproduction dudit menu, une liste globale d'éléments de déclenchement dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

14. Générateur de menu adaptable comportant au moins une liste globale d'éléments de déclenchement, ledit générateur comportant un adaptateur dudit menu à un contexte d'utilisation par remplacement d'une liste globale d'éléments de déclenchement lors d'une reproduction dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

15. Application comportant un menu, ledit menu comportant au moins une liste globale d'éléments de déclenchement, ladite application mettant en oeuvre, au moyen desdits éléments de déclenchement, des actions prédéterminées associées auxdits éléments de déclenchement, ladite application comportant un adaptateur dudit menu à un contexte d'utilisation par remplacement d'une liste globale d'éléments de déclenchement lors d'une reproduction dudit menu par une liste réduite comportant des éléments de déclenchement prévus parmi les éléments de déclenchement de ladite liste globale, lesdits éléments de déclenchement prévus étant des éléments de déclenchement qui ont une probabilité d'être sélectionné dans ledit contexte d'utilisation supérieure à un seuil de sélection.

EP 2 879 034 A1

cntxt

$\overline{\phantom{m\_req}}$ 1111

doc

sma

thm

list

prdct

prob_calc

$m = \{LG_j\}_{j<J} = \{\,\{trg_i^j\}_{i<lj}\,\}_{j=1\ldots J}^{j\leq J}$

m_req

$\{trg_i\}_{i<lk}^k$     $m \supset LG_{k,k<J}$

$\{trg_i, prob_i\}_{i\leq lk}$

slct

$\langle\, prob \geq \mathcal{T} \,\rangle$

$LR_k = \{trg_i\}_{prob \geq \mathcal{T}, i \leq lk}$

$= \{trg_l\}_{l \leq L \leq lk}$

swtch

$m' \supset LR_k$

xtnd

**Fig. 1**

$m'' \supset LR'_k = LR_k + ext(LG_k)$

repro

hgh (prob_l)     adpt (nb)

**Fig. 2**

**Fig. 3**

| m | LG1 | LG2 | . . . | LG $_N$ |
|---|-----|-----|-------|---------|
|   | trg 100 | | | |
|   | trg 101 | | | |
|   | trg 102 | | | |
|   | ⋮ | | | |
|   | TRG 1XY | | | |

**Fig. 4a**

A

unb (trg 100) = 10          prob (trg 100, U = A) = 20
unb (trg 101) = 0           prob (trg 101, U = A) = 0
unb (trg 102) = 3           prob (trg 102, U = A) = 6
unb (trg 103) = 0    ⇨      prob (trg 103, U = A) = 2
        ⋮                            ⋮
unb (trg 110) = 7           prob (trg 110, U = A) = 10

⇨ LR1 = [trg 100, trg 102,trg 103,trg 110")

**Fig. 4b**

| m | LR1 | LR2 | · · · | LR $_N$ |
|---|-----|-----|-------|---------|
| | trg 100 | | | |
| | trg 102 | | | |
| | trg 103 | | | |
| | ⋮ | | | |
| | trg 110 | | | |
| | ⋮ | | | |

**Fig. 4c(1)**

| m | LR1 | LR2 | · · · | LR $_N$ |
|---|-----|-----|-------|---------|
| | ⋮ | | | |
| | trg 100 | | | |
| | ⋮ | | | |
| | trg 110 | | | |
| | ⋮ | | | |
| | trg 102 | | | |
| | ⋮ | | | |
| | trg 103 | | | |

**Fig. 4c(2)**

| m | LR1 | LR2 | · · · | LR $_N$ |
|---|-----|-----|-------|---------|
| | TRG 100 | | | |
| | trg 102 | | | |
| | trg 103 | | | |
| | ⋮ | | | |
| | trg 110 | | | |
| | ⋮ | | | |

**Fig. 4c(3)**

sma(doc)

thm1 ✓

thm2 ✓

sma

doc

**Fig. 5a**

KW SRCH

BDD

LR1 ∧   LR2 ∧

ext

trg11 = thm1

trg12 = thm1

**Fig. 5b**

Europäisches
Patentamt

European
Patent Office

Office européen
des brevets

**RAPPORT DE RECHERCHE EUROPEENNE**

Numéro de la demande

EP 14 19 5451

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 1 248 184 A1 (NOKIA CORP [FI]) 9 octobre 2002 (2002-10-09) * alinéas [0004] - [0021] * * alinéas [0023], [0025] * * figures 1,3 * ----- | 1-15 | INV. G06F3/0482 |
| X | EP 1 840 705 A1 (RESEARCH IN MOTION LTD [CA]) 3 octobre 2007 (2007-10-03) * alinéas [0009] - [0014] * * alinéas [0031], [0032] * * alinéa [0039] * * alinéas [0042], [0043], [0046] * * figures 1-5 * ----- | 1-15 | |
| X | US 2010/050128 A1 (CHIANG MING-HSIU [TW] ET AL) 25 février 2010 (2010-02-25) * alinéas [0010] - [0025] * * alinéas [0055] - [0059] * * figures 1,4 * ----- | 1-15 | |
| | | | DOMAINES TECHNIQUES RECHERCHES (IPC) G06F H04M |

Le présent rapport a été établi pour toutes les revendications

| Lieu de la recherche | Date d'achèvement de la recherche | Examinateur |
|---|---|---|
| La Haye | 19 mars 2015 | Piriou, Nominoë |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

...........................................................................................

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 14 19 5451

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

19-03-2015

| Document brevet cité au rapport de recherche | Date de publication | Membre(s) de la famille de brevet(s) | Date de publication |
|---|---|---|---|
| EP 1248184 A1 | 09-10-2002 | EP 1248184 A1<br>US 2002140727 A1 | 09-10-2002<br>03-10-2002 |
| EP 1840705 A1 | 03-10-2007 | CA 2583058 A1<br>EP 1840705 A1 | 30-09-2007<br>03-10-2007 |
| US 2010050128 A1 | 25-02-2010 | CN 101661367 A<br>US 2010050128 A1 | 03-03-2010<br>25-02-2010 |

EPO FORM P0460

Pour tout renseignement concernant cette annexe : voir Journal Officiel de l'Office européen des brevets, No.12/82